# EUROPEAN PATENT APPLICATION

(11) **EP 4 468 565 A1**
(43) Date of publication of application: **27.11.2024**
(21) Application number: 22922003.3
(22) Date of filing: 03.10.2022
(51) Int. Cl.: H02K 1/276, H02K 1/22

(54) **ROTATING ELECTRIC MACHINE**

(30) Priority: 21.01.2022 JP 2022008166
(71) Applicant: Kabushiki Kaisha Toshiba, Tokyo 105-0023 (JP); Toshiba Infrastructure Systems & Solutions Corporation, Kawasaki-shi, Kanagawa 212-0013 (JP)
(72) Inventor: MAKINO, Hiroaki, Kawasaki-shi, Kanagawa 212-0013 (JP); SASAKI, Naoya, Kawasaki-shi, Kanagawa 212-0013 (JP)
(74) Representative: AWA Sweden AB
(86) International application number: PCT/JP2022/036901
(87) International publication number: WO 2023/139850

(57) **Abstract**

A rotating electric machine according to an embodiment includes: a rotor in which permanent magnets forming one magnetic pole are plurally disposed in a circumferential direction in a cylindrical core; a stator in which windings are provided in multiple slots facing the rotor; and multiple groove portions being formed on an outer circumferential surface of one or both of regions of the rotor, the regions being obtained by dividing the one magnetic pole of the rotor into two by a magnetic pole center line, the multiple groove portions being separated from each other by a core having a diameter equivalent to a circumscribed circle of the rotor, wherein each of the multiple groove portions has a shape protruding toward a rotation center of the rotor, and the multiple groove portions are spaced such that a distance between deepest portions of the groove portions has a phase relationship by which torque ripple of a predetermined order caused by formation of the groove portions weaken each other.

## Description

### FIELD

Embodiments of the present invention relate to a rotating electric machine.

### BACKGROUND

In recent years, electric vehicles have been widely used in order to realize a decarbonized society. As a power source of such an electric vehicle, a rotating electric machine such as a permanent magnet motor is generally used. In the rotating electric machine, torque ripple that causes electromagnetic noise is generated when a motor is loaded, and thus, there is a need to reduce the torque ripple.

Conventionally, as a method for reducing the torque ripple, it has been proposed to provide one or more groove portions to the outer circumference of a rotor. For example, in a motor configuration with 8-poles and 48-slots, in order to reduce torque ripple of the 12th-order component of electricity, a method of providing one or more groove portions per pole symmetrically with respect to the center line of a magnetic pole has been proposed (see, for example, Patent Literatures 1 and 2).

### CITATION LIST

### Patent Literature

Patent Literature 1: JP 2008-312316 A
Patent Literature 2: JP 2004-328956 A

### SUMMARY OF THE INVENTION

### Problem to be Solved by the Invention

However, in the conventional technique, although it is possible to reduce the torque ripple of a specific order by forming the groove portion, there is a possibility that the torque ripple of other orders is rather increased due to the influence of the groove portion.

An object of the present invention is to provide a rotating electric machine capable of reducing an influence of torque ripple secondarily caused by formation of groove portions.

### Means for Solving Problem

A rotating electric machine according to an embodiment includes: a rotor in which permanent magnets forming one magnetic pole are plurally disposed in a circumferential direction in a cylindrical core; a stator in which windings are provided in multiple slots facing the rotor; and multiple groove portions being formed on an outer circumferential surface of one or both of regions of the rotor, the regions being obtained by dividing the one magnetic pole of the rotor into two by a magnetic pole center line, the multiple groove portions being separated from each other by a core having a diameter equivalent to a circumscribed circle of the rotor, wherein each of the multiple groove portions has a shape protruding toward a rotation center of the rotor, and the multiple groove portions are spaced such that a distance between deepest portions of the groove portions has a phase relationship by which torque ripple of a predetermined order caused by formation of the groove portions weaken each other.

### BRIEF DESCRIPTION OF DRAWINGS

FIG. 1 is a cross-sectional view of a rotating electric machine according to a first embodiment in the axial direction;
FIG. 2 is a diagram illustrating one magnetic pole of the rotating electric machine illustrated in FIG. 1;
FIG. 3 is a diagram for explanation of a configuration of groove portions in the rotating electric machine according to the first embodiment;
FIG. 4 is a partially enlarged view of a part P1 illustrated in FIG. 3;
FIG. 5 is a diagram for explanation of an effect of reducing torque ripple by groove portions according to the first embodiment;
FIG. 6 is a diagram illustrating a relationship between torque ripple and an interval of groove portions in the rotating electric machine according to the first embodiment;
FIG. 7 is a diagram illustrating a relationship between a size of a groove portion and a torque reduction rate in the rotating electric machine according to the first embodiment;
FIG. 8 is a diagram for explanation of a configuration of groove portions in a rotating electric machine according to a second embodiment;
FIG. 9 is a partially enlarged view of a part P2 illustrated in FIG. 8;
FIG. 10 is a diagram for explanation of an effect of reducing torque ripple by groove portions according to the second embodiment;
FIG. 11 is a diagram illustrating a relationship between torque ripple and an interval of groove portions in the rotating electric machine according to the second embodiment;
FIG. 12 is a diagram for explanation of a configuration of groove portions in a rotating electric machine according to a third embodiment;
FIG. 13 is a partially enlarged view of a part P3 illustrated in FIG. 12;
FIG. 14 is a diagram for explanation of an effect of reducing torque ripple by groove portions according to the third embodiment;
FIG. 15 is a diagram illustrating a relationship between torque ripple and an interval between a first set and a second set in the rotating electric machine according to the third embodiment;
FIG. 16 is a diagram for explanation of a configuration of groove portions in a rotating electric machine according to a fourth embodiment;
FIG. 17 is a partially enlarged view of a part P4 illustrated in FIG. 16;
FIG. 18 is a diagram for explanation of an effect of reducing torque ripple by groove portions according to the fourth embodiment;
FIG. 19 is a diagram for explanation of a configuration of groove portions in a rotating electric machine according to a fifth embodiment;
FIG. 20 is a partially enlarged view of a part P5 illustrated in FIG. 19; and
FIG. 21 is a diagram for explanation of an effect of reducing torque ripple by groove portions according to the fifth embodiment.

### DETAILED DESCRIPTION

Hereinafter, a rotating electric machine according to an embodiment will be described with reference to the drawings.

### (First Embodiment)

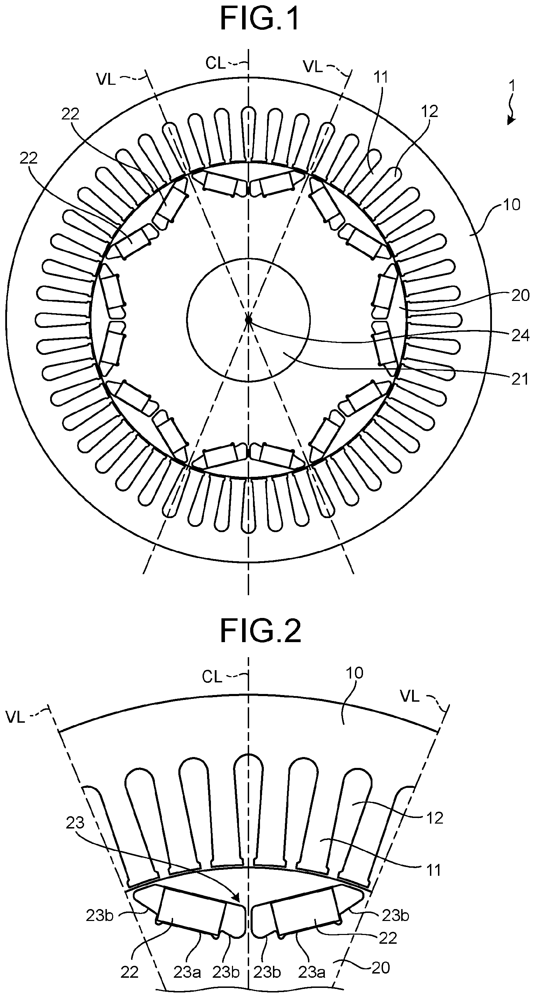

FIG. 1 is a cross-sectional view of a rotating electric machine 1 according to the first embodiment in the axial direction. FIG. 2 is a diagram illustrating one magnetic pole of the rotating electric machine 1 illustrated in FIG. 1.

The rotating electric machine 1 includes a stator (stator) 10 that is formed in a substantially cylindrical shape, and a rotor (rotor) 20 that is rotatably housed in the stator 10.

A plurality of stator teeth 11 protruding radially inward is formed on an inner circumferential surface of the stator 10. Recessed slot portions 12 are formed between the stator teeth 11. Each slot portion 12 opens toward the inner circumference of the stator 10. Forty-eight slot portions 12 are formed in the rotating electric machine 1 of the present embodiment.

In addition, three-phase (U-phase, V-phase, and W-phase) windings constituting coils for generating magnetic flux are wound and formed around the stator teeth 11 by distributed winding (neither is illustrated). Each of the three-phase coils is supplied with different phases of AC power. As a result, a magnetic flux passing through each coil is generated. Each coil may be directly wound around the stator teeth 11, or may be attached by using an insulator.

The rotor 20 is formed of, for example, a rotor core in which a plurality of thin steel materials is laminated in the axial direction. A rotating shaft 21 extending in a front and back direction (axial direction) of the drawing is fixed to the center of the rotor 20. The rotating shaft 21 is rotatably supported. The rotor 20 includes a plurality of permanent magnets 22. The rotor 20 is formed to have an interior permanent magnet (IPM) structure in which a pair of permanent magnets 22 is embedded as one magnetic pole so as to have a substantially V-shape opening toward an outer circumferential surface of the rotor 20.

More specifically, in the rotor 20, multiple V-shaped spaces 23 each having a housing space 23a and flux barriers 23b are formed at predetermined intervals in the circumferential direction of the rotor 20. The housing space 23a is for accommodating the flat plate-like permanent magnet 22 extending in the front and back direction of the drawing. The flux barriers 23b are located on both end sides in the width direction of the permanent magnet 22 to restrict the wraparound of the magnetic flux.

Here, in one V-shaped space 23, magnetic polarity, on the outer circumferential surface side of the rotor 20, of the permanent magnets 22 accommodated in the housing spaces 23a is the same. Additionally, among adjacent V-shaped spaces 23, magnetic polarity, on the outer circumferential surface side of the rotor 20, of the permanent magnets 22 accommodated in the housing spaces 23a are different from each other. Namely, the rotating electric machine 1 of the present embodiment has a configuration with 8-poles and 48-slots in which front and back surfaces of an N pole and an S pole are alternately disposed for each pair of permanent magnets 22 forming one magnetic pole.

A center line CL of the magnetic poles of the pair of permanent magnets 22 accommodated in the V-shaped space 23 passes through the middle of the pair of housing spaces 23a of the V-shaped space 23 and a center point 24 of the rotor 20 (rotating shaft 21). A virtual straight line VL having an electrical angle of 90 degrees with respect to the center line CL passes through the middle of the adjacent V-shaped spaces 23 and the center point 24 of the rotor 20. Hereinafter, on the outer circumferential surface of the rotor 20, a region that corresponds to one magnetic pole and is segmented by a pair of left and right virtual straight lines VL centered on the center line CL is also referred to as "one magnetic pole region".

In the above-described configuration of the rotating electric machine 1, when each coil of the stator 10 is supplied with an alternating current, magnet torque and reluctance torque are generated in the rotor 20 to perform rotational drive around the axis, thereby functioning as a permanent magnet motor.

By the way, in the rotating electric machine 1 having such a configuration, torque ripple, which is unevenness of rotation, is generated when a load is applied to the motor. Due to increase in the torque ripple, vibration and electromagnetic noise increase, so that there is a need to reduce the torque ripple. In particular, it is preferable to reduce the electric noise because a frequency band of the electric noise, which is a component of the noise, is high and causes unpleasant sound.

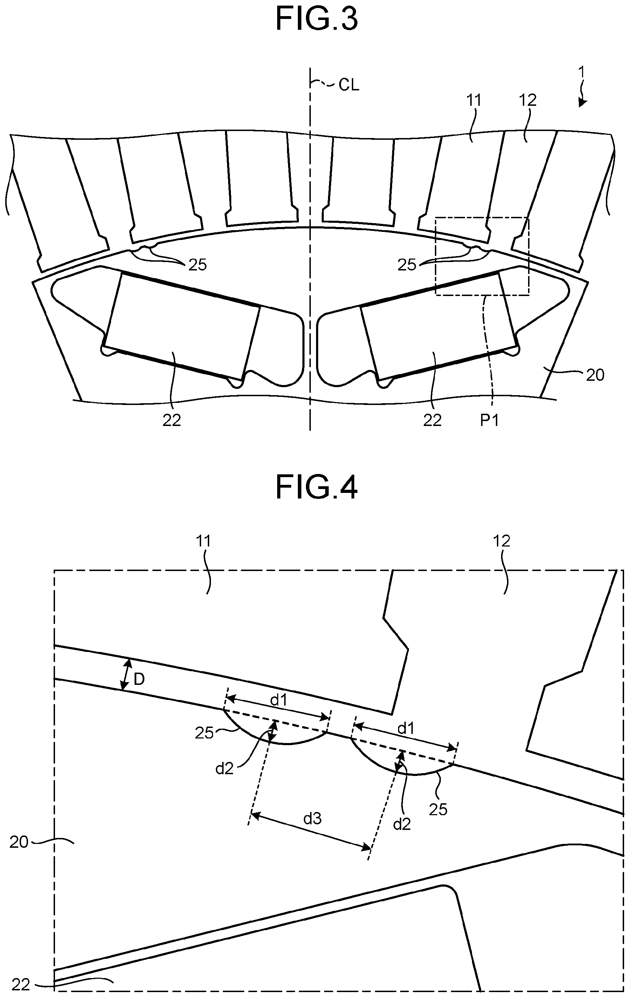

Therefore, in the rotating electric machine 1 of the present embodiment, multiple groove portions are formed on the outer circumferential surface of the rotor 20 in order to reduce the torque ripple. Specifically, in the rotating electric machine 1 of the present embodiment, one or two groove portion groups each having two groove portions as one set are formed for each magnetic pole region, and an interval between the groove portions forming one set is provided so as to have a phase relationship by which torque ripple of a predetermined order caused by forming the groove portions weakens each other. Hereinafter, the configuration of groove portions 25 provided on the outer circumferential surface of the rotor 20 will be described with reference to FIGS. 3 and 4.

FIG. 3 is a diagram for explanation of the configuration of the groove portions 25 in the rotating electric machine 1 according to the first embodiment, and illustrates one magnetic pole part of the rotor 20. Additionally, FIG. 4 is a partially enlarged view of a part P1 illustrated in FIG. 3.

As illustrated in FIGS. 3 and 4, multiple groove portions 25 are provided on the outer circumferential surface of the rotor 20. Specifically, two groove portions 25 forming one set are provided in each of regions obtained by dividing one magnetic pole region into two by the center line CL.

Here, each of the groove portions 25 is formed over the axial direction of the rotating shaft 21 and has a cross-sectional shape protruding toward the rotation center of the rotor 20. For example, the groove portion 25 is formed in a substantially arc shape. The width d1 of the groove portion 25 is about 6.0 degrees in electrical angle, and the depth d2 of the deepest portion of the groove portion 25 corresponds to 60% of a separation distance (hereinafter, also referred to as a gap length D) between the stator teeth 11 of the stator 10 and the circumscribed circle of the rotor 20.

The two groove portions 25 forming one set are separated from each other by a spacer (rotor core) having the diameter equivalent to that of a circumscribed circle circumscribing the outer circumferential surface of the rotor 20. In the present embodiment, the two groove portions 25 forming one set are spaced such that a distance d3 between the deepest portions of the groove portions 25 is 7.5 degrees in electrical angle.

Additionally, the circumferential positions in the rotor 20 where the groove portions 25 of one set are formed are provided in the vicinity of each corner of the permanent magnets 22 that are disposed in a V-shape in one magnetic pole region of the rotor 20. Specifically, in the rotating electric machine 1 of the present embodiment, the intermediate position between the deepest portions of the two groove portions 25 of one set is located at a position where the electrical angle from the center line CL is 53 degrees. In addition, one set of the groove portions 25, which is provided in each region obtained by dividing the one magnetic pole region into two by the center line CL, is provided at position of being line-symmetric with respect to the center line CL.

In the one magnetic pole region of the rotor 20, the circumferential position where one set of the groove portions 25 is formed is not limited to the above-described example. Note that, as illustrated in FIG. 3, in a case where one set of the groove portions 25 is formed in the vicinity of a corner of the permanent magnet 22, which is more distant from the center line CL, it is preferable that the intermediate position between the deepest portions of the two groove portions 25 forming the one set is located in a range of 49.2 degrees to 58.0 degrees in electrical angle from the center line CL. Moreover, in the present embodiment, one set of the groove portions 25 may be formed in the vicinity of a corner that is closer to the center line CL among the corners of the permanent magnets 22 disposed in a V-shape. In this case, the intermediate position between the deepest portions of the two groove portions 25 forming the one set is preferably located in a range of 20.4 degrees to 32.4 degrees in electrical angle from the center line CL. In the present embodiment, one set of groove portions 25 is provided in each of regions obtained by dividing one magnetic pole region into two by the center line CL, but the present invention is not limited thereto, and the groove portions 25 may be provided in either one of the regions.

Hereinafter, an effect of reducing the torque ripple by the groove portions 25 having the above-described configuration will be described.

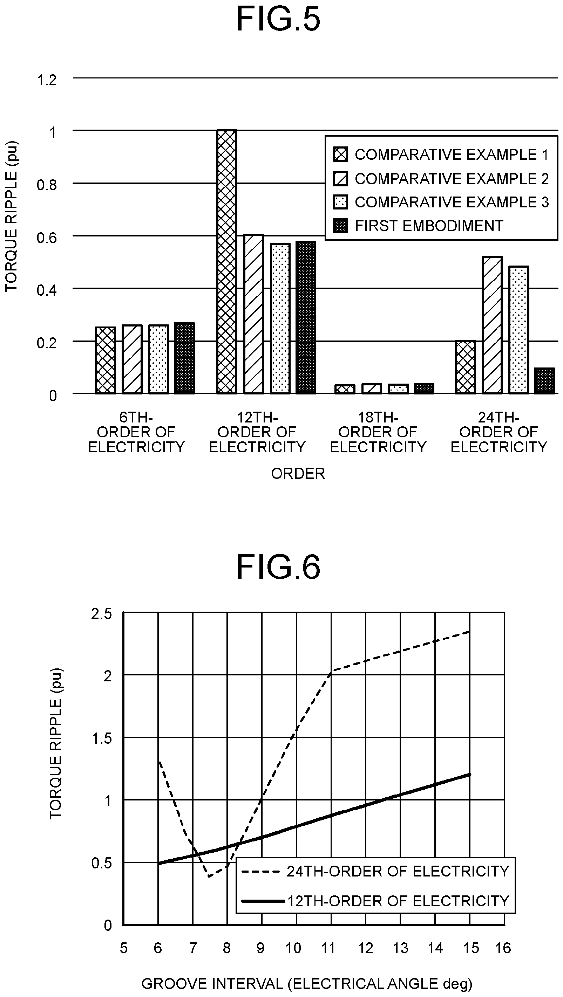

FIG. 5 is a diagram for explanation of the effect of reducing the torque ripple by the groove portions 25 according to the first embodiment. In FIG. 5, the horizontal axis represents the order of the electrical angular frequency, and the vertical axis represents the magnitude of the torque ripple. In addition, each graph illustrated in FIG. 5 represents an analysis result of the torque ripple for a case where a load is applied to the rotating electric machine 1 (the first embodiment), and also represents an analysis result of the torque ripple for a case where a load is applied to the configurations of other rotating electric machines (Comparative Examples 1 to 3).

Comparative Example 1 is represents a rotating electric machine having a configuration in which no groove portion is provided on the outer circumferential surface of the rotor 20. Comparative Example 2 represents a rotating electric machine having a configuration in which one groove portion is provided in each region obtained by dividing one magnetic pole region into two by the center line CL. Comparative Example 3 represents a rotating electric machine having a configuration in which two groove portions adjacent to each other are disposed in each region obtained by dividing one magnetic pole region into two by the center line CL. The shape and size (width d1 and depth d2) of the groove portions used in Comparative Examples 2 and 3 are assumed to be similar to the size of the groove portions 25 in the present embodiment.

As illustrated in FIG. 5, in the rotating electric machine having a configuration in which no groove portion is provided, torque ripple of the 12th-order component of electricity remarkably appears (see Comparative Example 1). On the other hand, in the rotating electric machine in which one groove portion is provided and the rotating electric machine in which two groove portions are disposed adjacent to each other, the torque ripple of the 12th-order component of electricity decreases in comparison with Comparative Example 1 (see Comparative Examples 2 and 3). Thus, it can be seen that the torque ripple of the 12th-order component of electricity can be reduced by providing groove portion(s). The torque ripple of the sixth-order of electricity and the torque ripple of the 18th-order of electricity are substantially the same in Comparative Examples 1 to 3.

However, focusing on the torque ripple of the 24th-order component of electricity, the torque ripple in Comparative Examples 2 and 3 tends to increase in comparison with Comparative Example 1. This increase is considered to be caused by the torque ripple of new 24th-order component of electricity that is secondarily generated by providing the groove portion(s).

Therefore, for the rotating electric machine 1 of the present embodiment, an interval with which the torque ripple of the 12th-order component of electricity and the torque ripple of the 24th-order component of electricity can be simultaneously reduced is derived from the relationship between the torque ripple and the interval of the groove portions 25 illustrated in FIG. 6, and the resultant is applied to the above-described configuration.

FIG. 6 is a diagram illustrating a relationship between torque ripple and an interval of the groove portions 25 in the rotating electric machine 1 according to the first embodiment. Here, the horizontal axis represents the interval between the groove portions 25 (interval between the deepest portions) and the vertical axis represents the magnitude of the torque ripple. In FIG. 6, the value of the torque ripple is normalized based on the analysis result of Comparative Example 1 in which no groove portion is provided.

As illustrated in FIG. 6, as to the 12th-order component of electricity, the value of the torque ripple tends to increase as the interval between the groove portions 25 increases. Here, a state where the torque ripple is 1 (pu) means that it is the same as the analysis result in Comparative Example 1, and a state where the torque ripple is less than 1 (pu) means that the torque ripple is lower than that of Comparative Example 1. Namely, the torque ripple of the 12th-order component of electricity can be made lower than that of Comparative Example 1 by setting the interval between the groove portions 25 in a range that the electrical angle is larger than 6.0 degrees and less than 12.5 degrees.

On the other hand, as to the 24th-order component of electricity, a graph has a shape that protrudes downward according to change in interval between the groove portions 25. Here, in a range that the interval between the groove portions 25 is larger than an electrical angle of 6.5 degrees and less than an electrical angle of 9.0 degrees, the torque ripple is 1 (pu) or less.

Therefore, by setting the interval between the groove portions 25 in a range that the electrical angle is larger than 6.5 degrees and less than 9.0 degrees, it is possible to simultaneously implement the reduction of the 12th-order component of electricity of the torque ripple and the prevention of increase in the 24th-order component of electricity that is secondarily generated by providing the groove portion. The reason why the torque ripple of both the components decreases is considered to be mainly due to the following two points. The first point is that, phases of torque ripple of new 12th-order and 24th-order components of electricity, which are generated by providing one set of groove portions 25, act (interfere) independently for each order of the electrical angular frequency. The second point is that, the torque ripple newly generated by the groove portions has a phase relationship by which the 12th-order component of electricity strengthens each other and a phase relationship by which the 24th-order component of electricity weakens each other.

Specifically, one set of groove portions 25 that are separated in the above-described range has a phase relationship by which the phase of the torque ripple of the 12th-order component of electricity generated by providing the groove portions 25 and the phase of the torque ripple of the original 12th-order component of electricity weaken each other. Additionally, one set of groove portions 25 that are separated in the above-described range has a phase relationship by which the phase of the torque ripple of the 24th-order component of electricity generated by providing one of the groove portions 25 and the phase of the torque ripple of the 24th-order component of electricity generated by providing the other one of the groove portions 25 weaken each other. Thus, by separating the groove portions 25 of one set within the above-described range, the 12th-order component of electricity decreases, and the increase in the 24th-order component of electricity generated by providing the groove portions is prevented.

In other words, even if the two groove portions 25 forming one set are provided in one magnetic pole region, the phases related to the torque ripple of the 24th-order component of electricity do not weaken each other when the interval between those groove portions 25 deviates from the above-described range. Accordingly, for example, in Comparative Example 3 of FIG. 5, the torque ripple of the 24th-order component of electricity becomes 1 (pu) or more.

As described above, in the rotating electric machine 1 of the present embodiment, the interval between the two groove portions 25 forming one set is an electrical angle of 7.5 degrees. Such an interval falls within the range that the electrical angle is larger than 6.5 degrees and less than 9.0 degrees, and corresponds to the minimum value in the graph for the torque ripple of the 24th-order component of electricity illustrated in FIG. 6. Thus, the two groove portions 25 forming one set are disposed at the interval enabling a phase relationship by which torque ripple of the 24th-order component of electricity generated by the formation of the groove portions 25 weaken each other.

Therefore, in the rotating electric machine 1 of the present embodiment, as illustrated in FIG. 5, the torque ripple of the 12th-order component of electricity can be reduced in comparison with Comparative Example 1, and the torque ripple of the 12th-order component of electricity can be reduced to the same extent as those in Comparative Examples 2 and 3. In the rotating electric machine 1 of the present embodiment, it is possible to prevent increase in the torque ripple of the secondary 24th-order component of electricity that is newly generated by providing one set of groove portions 25, and possible to reduce the torque ripple in comparison with that in Comparative Example 1.

Note that, in the present embodiment, the interval between the groove portions 25 forming one set is an electrical angle of 7.5 degrees, but the present invention is not limited thereto. A value of the interval is not particularly limited as long as the interval is within the range that the electrical angle is larger than 6.5 degrees and less than 9.0 degrees.

Moreover, in the above-described embodiment, the size of the groove portion 25 is defined by the width d1 being an electrical angle of 6.0 degrees and the depth d2 being about 60% of the gap length D. However, the present invention is not limited thereto, and the groove portion may be formed in other sizes. However, the size of the groove portion 25 affects the torque reduction of the rotor 20, so that it is preferable to set the size of the groove portion 25 within an allowable reduction rate. Specifically, the torque reduction rate tends to increase as the sum of the sizes of all the groove portions 25 provided in the rotor 20 increases.

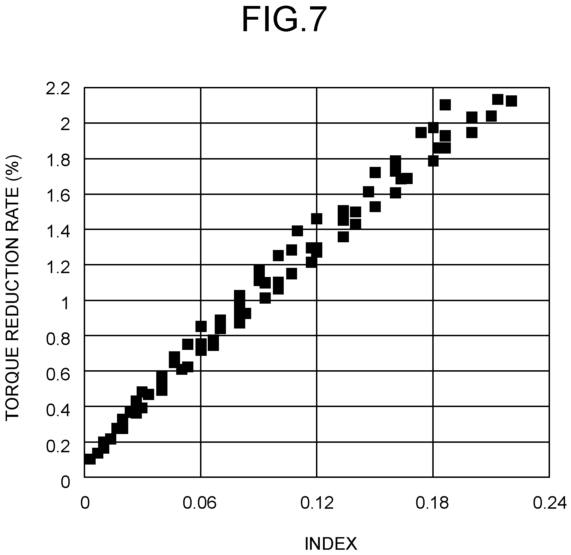

FIG. 7 is a diagram illustrating a relationship between the size of the groove portion 25 and a torque reduction rate in the rotating electric machine according to the first embodiment. In FIG. 7, the horizontal axis represents an index indicating the size of the groove portion 25, and the vertical axis represents an average value of the torque reduction rate of the rotor 20.

Note that the index refers to a total value of the values M, each obtained by calculating the following Formula (1), for all the groove portions 25 in one magnetic pole region. For example, in a case where N (for example, four) groove portions 25 of the same size are provided in one magnetic pole, a value obtained by multiplying the value M by N is used as the index. M = (ratio of width d1 of groove portion 25 to one cycle of electrical angle) × (ratio of depth of groove portion 25 to gap length D)

As illustrated in FIG. 7, the torque reduction rate tends to increase as the index increases. Specifically, as the size of the groove portion 25 increases, the gap length D between the stator 10 and the rotor 20 equivalently increases, resulting in reduction in torque of the rotor 20.

Therefore, the size of the groove portion 25 is determined based on the relationship between the index and the torque reduction rate illustrated in FIG. 7, and thereby the torque reduction rate can be kept within a desired range. For example, in a case of keeping the torque reduction rate at 2% or less, the size of the groove portion 25 formed in one magnetic pole is set such that the index is less than 0.18, and thereby the torque reduction rate can be kept at 2% or less. As to the size of the groove portion 25, the width d1 is assumed to be a value less than the distance d3.

As described above, the size of the groove portion 25 is determined in consideration of the influence on the torque, which makes it possible to achieve the rotating electric machine 1 capable of maintaining desired torque and reducing the torque ripple of the 12th-order component of electricity and the 24th-order component of electricity.

### (Second Embodiment)

Next, the second embodiment will be described. In the first embodiment, one or two sets of two groove portions 25 are provided per magnetic pole. However, the number of groove portions 25 forming one set is not limited thereto.

In the second embodiment, a configuration for a case where the number of groove portions 25 forming one set is three will be described. Note that elements similar to those described in the first embodiment are denoted by the same reference numerals, and description thereof will be omitted as appropriate.

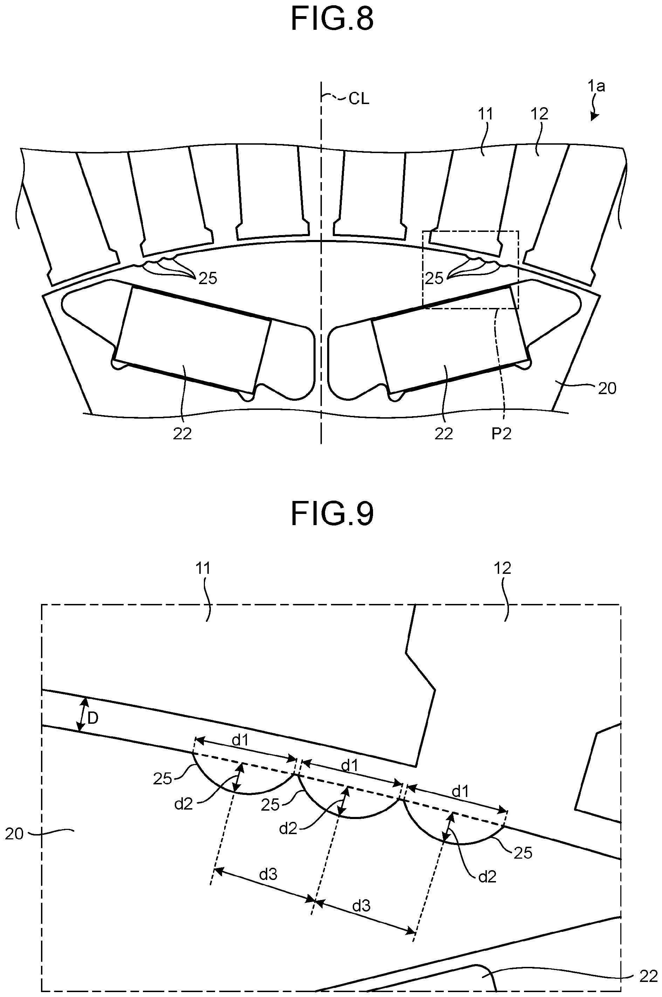

FIG. 8 is a diagram for explanation of the configuration of the groove portions 25 in a rotating electric machine 1a according to the second embodiment, and illustrates one magnetic pole part of the rotor 20. FIG. 9 is a partially enlarged view of a part P2 illustrated in FIG. 8.

As illustrated in FIGS. 8 and 9, the multiple groove portions 25 are provided on the outer circumferential surface of the rotor 20. Specifically, as for the groove portions 25, three groove portions 25 forming one set are provided in each of regions obtained by dividing one magnetic pole region into two by the center line CL.

Here, each of the groove portions 25 is formed over the axial direction of the rotating shaft 21 and has a cross-sectional shape protruding toward the rotation center of the rotor 20. For example, the groove portion 25 is formed in a substantially arc shape. The width d1 of the groove portion 25 is about 4.8 degrees in electrical angle, and the depth d2 of the deepest portion of the groove portion 25 is equivalent to 60% of the gap length D.

The three groove portions 25 forming one set are separated from each other by a spacer (rotor core) having the same diameter as a circumscribed circle circumscribing the outer circumferential surface of the rotor 20. In the rotating electric machine 1a according to the present embodiment, the three groove portions 25 forming one set are spaced such that a distance d3 between the deepest portions of the groove portions 25 is 5.0 degrees in electrical angle.

Moreover, the circumferential position on the rotor 20 where one set of groove portions 25 is located in the vicinity of one of corners of the permanent magnets 22 that are disposed to form a V-shape in one magnetic pole region of the rotor 20. Specifically, in the rotating electric machine 1a of the present embodiment, the intermediate position between the deepest portions of the three groove portions 25 forming one set is located at a position where the electrical angle is 53 degrees from the center line CL. Additionally, one set of groove portions 25 provided in each region, which is obtained by dividing the one magnetic pole region into two by the center line CL, is provided at positions so as to be line-symmetric with respect to the center line CL.

In one magnetic pole region of the rotor 20, the circumferential position where one set of groove portions 25 is formed is not limited to the above example. However, as illustrated in FIG. 8, in a case where one set of groove portions 25 is formed in the vicinity of a corner of the permanent magnet 22, which is more distant from the center line CL, it is preferable that the intermediate position between the deepest portions of the three groove portions 25 forming one set is located in a range of 49.2 degrees to 58.0 degrees in electrical angle from the center line CL. In the present embodiment, one set of groove portions 25 may be formed in the vicinity of a corner closer to the center line CL among the corners of the permanent magnets 22 disposed in a V-shape. In this case, the intermediate position between the deepest portions of the three groove portions 25 forming one set is preferably located in a range of 20.4 degrees to 32.4 degrees in electrical angle from the center line CL. Moreover, in the present embodiment, one set of groove portions 25 is provided in each of regions obtained by dividing one magnetic pole region into two by the center line CL, but the present invention is not limited thereto, and the groove portions 25 may be provided in either one of the two regions.

Hereinafter, an effect of reducing the torque ripple by the groove portions 25 having the above-described configuration will be described.

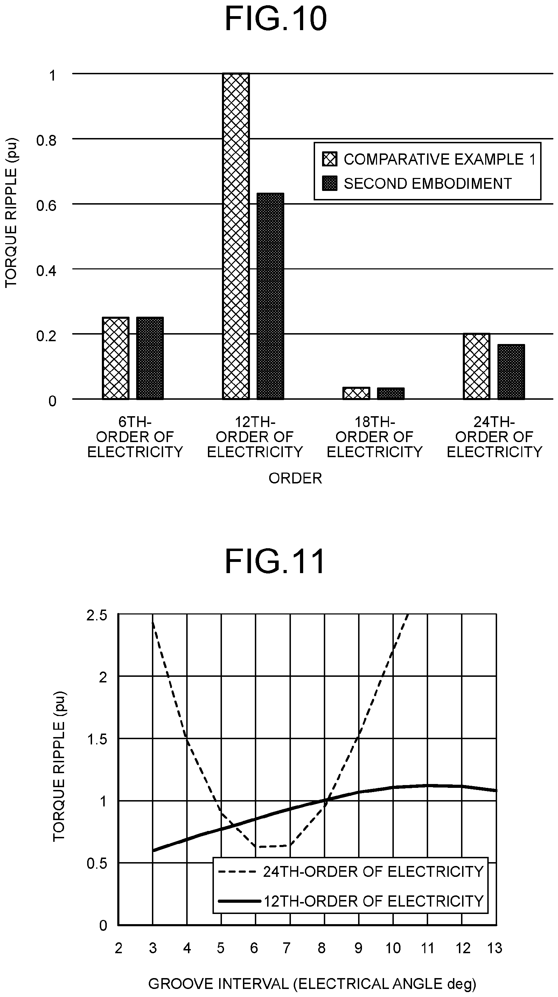

FIG. 10 is a diagram for explanation of the effect of reducing the torque ripple by the groove portions 25 according to the second embodiment. In FIG. 10, the horizontal axis represents the order of the electrical angular frequency, and the vertical axis represents the magnitude of the torque ripple. In addition, each graph illustrated in FIG. 10 illustrates an analysis result of the torque ripple for a case where a load is applied to the rotating electric machine 1a (the second embodiment), and also illustrates an analysis result of the torque ripple for a case where a load is applied to the configuration of another rotating electric machine as a comparative example (Comparative Example 1). Comparative Example 1 corresponds to a rotating electric machine having a configuration in which no groove portion is provided on the outer circumferential surface of the rotor 20.

As illustrated in FIG. 10, in the rotating electric machine of Comparative Example 1, torque ripple of the 12th-order component of electricity remarkably appears. On the other hand, in the rotating electric machine 1a of the present embodiment, the torque ripple of both the 12th-order component of electricity and the 24th-order component of electricity is reduced in comparison with Comparative Example 1. The torque ripple of the sixth-order component of electricity and the torque ripple of the 18th-order component of electricity are substantially the same as those in Comparative Example 1 and the present embodiment.

FIG. 11 is a diagram illustrating a relationship between torque ripple and an interval of the groove portions 25 in the rotating electric machine 1a according to the second embodiment. Here, the horizontal axis represents the interval between the groove portions 25 (interval between the deepest portions) and the vertical axis represents the magnitude of the torque ripple. In FIG. 11, the value of the torque ripple is normalized based on the analysis result in Comparative Example 1 in which no groove portion is provided.

As illustrated in FIG. 11, as to the 12th-order component of electricity, the value of the torque ripple tends to gradually increase as the interval between the groove portions 25 increases. Thus, the torque ripple of the 12th-order component of electricity can be made lower than that of Comparative Example 1 by setting the interval between the groove portions 25 to be less than an electrical angle of 8.0 degrees.

On the other hand, as to the 24th-order component of electricity, a graph has a shape that protrudes downward according to a change in the interval between the groove portions 25. Here, the torque ripple is 1 (pu) or less in a range that the interval between the groove portions 25 is larger than an electrical angle of 4.8 degrees and less than an electrical angle of 8.0 degrees.

Accordingly, the torque ripple of the 12th-order component of electricity and the 24th-order component of electricity can be reduced at the same time, by setting the interval between the groove portions 25 within a range that the interval is larger than an electrical angle of 4.8 degrees and less than an electrical angle of 8.0 degrees. The reason why the torque ripple of both the components is reduced is the same as that in the first embodiment. Specifically, the phase of the torque ripple of the 24th-order component of electricity secondarily generated by providing a part of the three groove portions 25 forming one set and the phase of the torque ripple of the 24th-order component of electricity secondarily generated by providing the remaining groove portions 25 have a phase relationship by which the phases weaken each other. Thus, by separating each of the three groove portions 25 forming one set within the above-described range, the torque ripple of the 12th-order component of electricity and the 24th-order component of electricity is reduced.

In other words, even if the three groove portions 25 forming one set are provided in one magnetic pole region, the phases related to the torque ripple of the 24th-order component of electricity do not weaken each other when the interval between those groove portions 25 deviates from the above-described range. Therefore, in a configuration in which the interval between the groove portions 25 deviates from the above-described range, there is a possibility that the torque ripple of the 24th-order component of electricity becomes 1 (pu) or more.

As described above, in the rotating electric machine 1a of the present embodiment, the interval between the three groove portions 25 forming one set is an electrical angle of 7.5 degrees. Such an interval falls within the range that the electrical angle is larger than 6.5 degrees and less than 9.0 degrees, and corresponds to the minimum value in the graph for the torque ripple of the 24th-order component of electricity illustrated in FIG. 11. Thus, the three groove portions 25 forming one set are disposed at the interval having a phase relationship by which the torque ripple of the 24th-order component of electricity generated by the formation of the groove portions 25 weaken each other.

Therefore, in the rotating electric machine 1a of the present embodiment, as illustrated in FIG. 10, the torque ripple of the 12th-order component of electricity can be reduced in comparison with Comparative Example 1. Additionally, in the rotating electric machine 1a of the present embodiment, it is possible to prevent increase in the torque ripple of the secondary 24th-order component of electricity newly generated by providing one set of groove portions 25, and possible to reduce the torque ripple in comparison with that in Comparative Example 1.

Note that, in the present embodiment, the interval between the groove portions 25 forming one set is an electrical angle of 6.0 degrees, but the value is not particularly limited thereto as long as the interval is within the range that the electrical angle is larger than 4.8 degrees and less than 8.0 degrees.

### (Third Embodiment)

Next, the third embodiment will be described. In the first embodiment, one set of two groove portions 25 is provided per region that is obtained by dividing one magnetic pole region into two by the center line CL. However, the number of sets of groove portions 25 provided per the region is not limited thereto.

In the third embodiment, description will be provided of a configuration for a case where two sets of the two groove portions 25 forming one set described in the second embodiment are provided per region obtained by dividing one magnetic pole region into two by the center line CL. Note that elements similar to those described in the first embodiment are denoted by the same reference numerals, and description thereof will be omitted as appropriate.

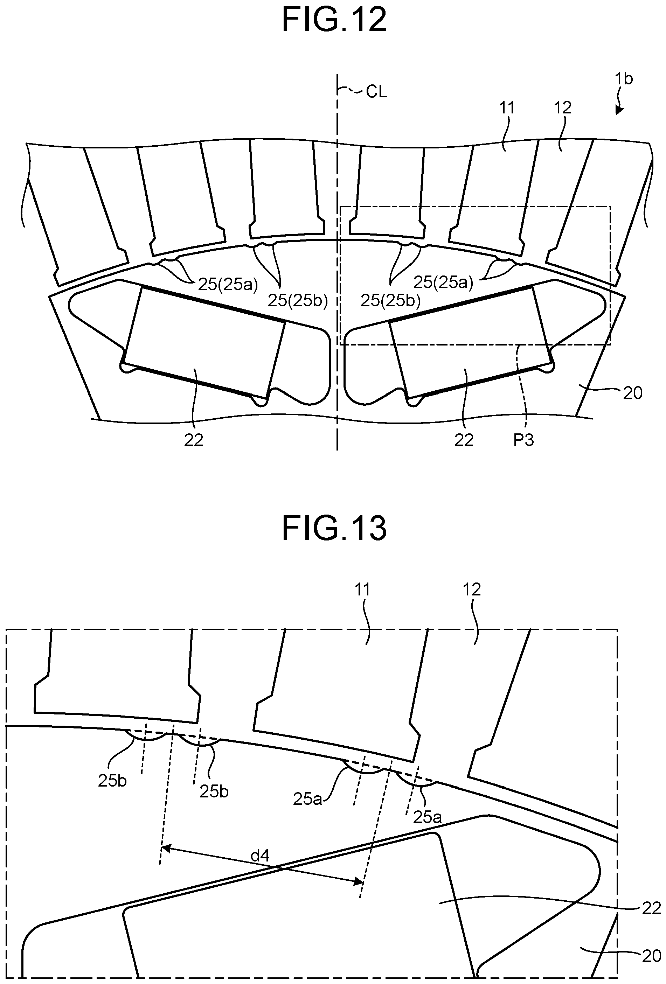

FIG. 12 is a diagram for explanation of the configuration of the groove portions 25 in a rotating electric machine 1b according to the third embodiment, and illustrates one magnetic pole part of the rotor 20. FIG. 13 is a partially enlarged view of a part P3 illustrated in FIG. 12.

As illustrated in FIGS. 12 and 13, the multiple groove portions 25 are provided on the outer circumferential surface of the rotor 20. Specifically, as for the groove portions 25, two sets of two groove portions 25 forming one set are provided in each of regions obtained by dividing one magnetic pole region into two by the center line CL. In FIGS. 12 and 13, among the two sets of groove portions 25, one set disposed at the same position as the set of groove portions 25 described in the first embodiment is denoted by a set of groove portions 25a, and the other set is denoted by a set of groove portions 25b. The size (width d1 and depth d2) and the distance d3 of the groove portions 25 constituting each set are the same as those in the first embodiment. Hereinafter, a set including the two groove portions 25a is also referred to as a "first set", and a set including the two groove portions 25b is also referred to as a "second set".

The first set and the second set are separated from each other by a spacer (rotor core) having the same diameter as a circumscribed circle circumscribing the outer circumferential surface of the rotor 20. In the rotating electric machine 1b of the present embodiment, a distance d4 between the center position between the deepest portions of 25a constituting the first set and the center position between the deepest portions of 25b constituting the second set is an electrical angle of 30 degrees.

In the present embodiment, the first set and the second set are provided in each of regions obtained by dividing one magnetic pole region into two by the center line CL so as to be line-symmetric with respect to the center line CL, but the present invention is not limited thereto. The first set and the second set may be provided in either one of the regions.

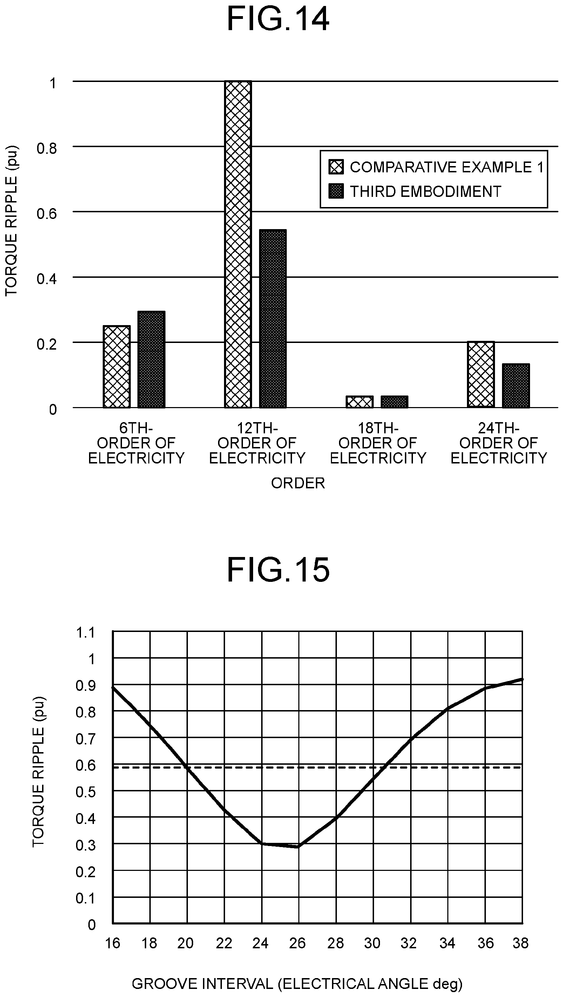

Hereinafter, with reference to FIGS. 14 and 15, an effect of reducing the torque ripple by the groove portions 25 having the above-described configuration will be described.

FIG. 14 is a diagram for explanation of the effect of reducing the torque ripple by the groove portions 25 according to the third embodiment. In FIG. 14, the horizontal axis represents the order of the electrical angular frequency, and the vertical axis represents the magnitude of the torque ripple. In addition, each graph illustrated in FIG. 14 illustrates an analysis result of the torque ripple for a case where a load is applied to the rotating electric machine 1b (third embodiment), and also illustrates an analysis result of the torque ripple for a case where a load is applied to the configuration of another rotating electric machine as a comparative example (Comparative Example 1). Comparative Example 1 corresponds to a rotating electric machine having a configuration in which no groove portion is provided on the outer circumferential surface of the rotor 20.

As illustrated in FIG. 14, in the rotating electric machine of Comparative Example 1, torque ripple of the 12th-order component of electricity remarkably appears. On the other hand, in the rotating electric machine 1b of the present embodiment, the torque ripple of both the 12th-order component of electricity and the 24th-order component of electricity is decreased in comparison with Comparative Example 1. The torque ripple of the sixth-order component of electricity in the present embodiment is slightly increased in comparison with that in Comparative Example 1. The torque ripple of the 18th-order component of electricity in the present embodiment is substantially the same as that in Comparative Example 1.

FIG. 15 is a diagram illustrating a relationship between torque ripple and an interval between the first set and the second set in the rotating electric machine 1b according to the third embodiment. Here, the horizontal axis represents the interval between the first set and the second set (interval between the intermediate positions of the deepest portions) and the vertical axis represents the magnitude of the torque ripple. The interval on the horizontal axis means an interval for a case where the position of the second set close to the center line CL is displaced while the position of the first set far from the center line CL is fixed.

A dashed line graph indicates values of the torque ripple of the 12th-order component of electricity in the first embodiment in which only the first set is provided (see FIG. 5). Additionally, a solid line graph is obtained by normalizing a value of the torque ripple of the 12th-order component of electricity in the present embodiment with a value of the torque ripple of the 12th-order component of electricity in Comparative Example 1 when the interval between the first set and the second set is changed.

As illustrated in FIG. 15, as to the torque ripple of the 12th-order component of electricity, a graph has a shape that protrudes downward according to a change in the interval between the first set and the second set. Here, it can be seen that, in a range that the interval between the first set and the second set is larger than an electrical angle of 20 degrees and less than an electrical angle of 31 degrees, the torque ripple is lower than the torque ripple of the 12th-order component of electricity in the first embodiment in which only the first set is provided.

As described above, in the rotating electric machine 1b of the present embodiment, the interval between the first set and the second set is an electrical angle of 30 degrees. Such an interval falls within a range that the electrical angle is larger than 20 degrees and less than 31 degrees. Therefore, in the rotating electric machine 1b of the present embodiment, as illustrated in FIG. 14, the torque ripple of the 12th-order component of electricity can be reduced in comparison with Comparative Example 1.

Moreover, the size and the distance d3 of the groove portions 25 constituting the first set and the second set are the same as those in the second embodiment. Accordingly, in the rotating electric machine 1b of the present embodiment, it is possible to prevent increase in the torque ripple of the secondary 24th-order component of electricity newly generated by providing the groove portions 25, and to reduce the torque ripple of the 24th-order component of electricity in comparison with that in Comparative Example 1.

In the present embodiment, the interval between the first set and the second set is an electrical angle of 30 degrees, but the value is not particularly limited as long as the electrical angle is within a range of larger than 20 degrees and less than 31 degrees.

### (Fourth Embodiment)

Next, the fourth embodiment will be described. In the second embodiment, one set of three groove portions 25 is provided per region obtained by dividing one magnetic pole region into two by the center line CL. However, the number of sets of groove portions 25 provided per the region is not limited thereto.

In the fourth embodiment, description is provided of a configuration for a case where two sets of the three groove portions 25 forming one set, described in the second embodiment, are provided per region obtained by dividing one magnetic pole region into two by the center line CL. Note that elements similar to those described in the second embodiment are denoted by the same reference numerals, and description thereof will be omitted as appropriate.

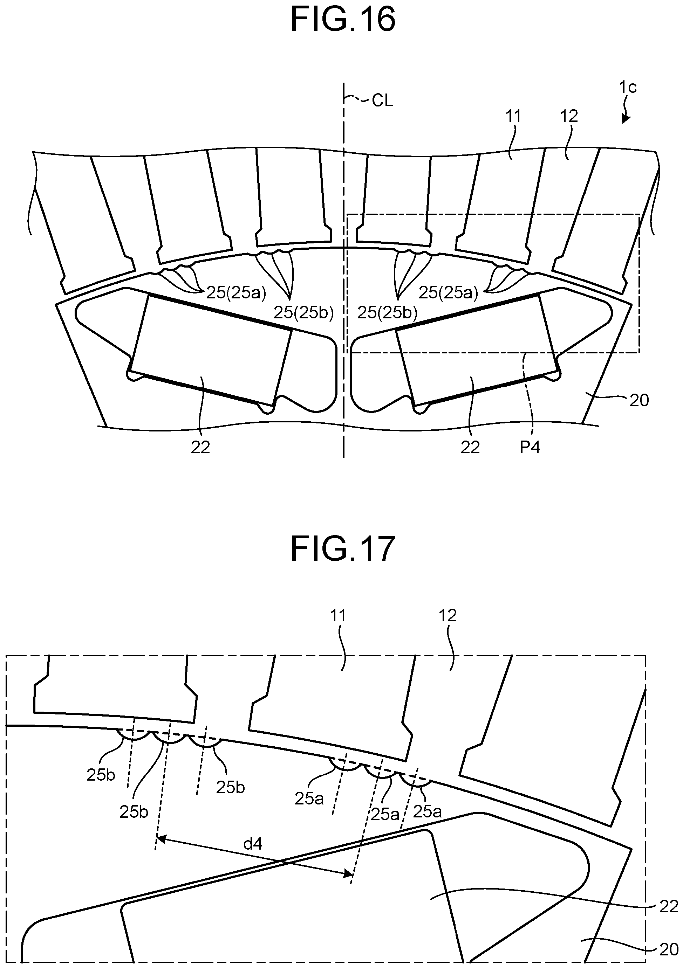

FIG. 16 is a diagram for explanation of the configuration of the groove portions 25 in a rotating electric machine 1c according to the fourth embodiment, and illustrates one magnetic pole part of the rotor 20. FIG. 17 is a partially enlarged view of a part P4 illustrated in FIG. 16.

As illustrated in FIGS. 16 and 17, the multiple groove portions 25 are provided on the outer circumferential surface of the rotor 20. Specifically, as for the groove portions 25, two sets of three groove portions 25 forming one set are provided in each of regions obtained by dividing one magnetic pole region into two by the center line CL. In FIG. 16, among the two sets of groove portions 25, one set disposed at the same position as the set of groove portions 25 described in the second embodiment is denoted by a set of groove portions 25a, and the other set is denoted by a set of groove portions 25b. The size (width d1 and depth d2) and the distance d3 of each of the groove portions 25 are the same as those in the second embodiment. Hereinafter, a set including the three groove portions 25a is referred to as a "first set", and a set including the three groove portions 25b is referred to as a "second set".

The first set and the second set are separated from each other by a spacer (rotor core) having the same diameter as a circumscribed circle circumscribing the outer circumferential surface of the rotor 20. In the rotating electric machine 1c of the present embodiment, a distance d4 between the center position among the deepest portions of 25a constituting the first set and the center position among the deepest portions of 25b constituting the second set is an electrical angle of 30 degrees.

In the present embodiment, the first set and the second set are provided in each of regions obtained by dividing one magnetic pole region into two by the center line CL so as to be line-symmetric with respect to the center line CL, but the present invention is not limited thereto. The first set and the second set may be provided in either one of the regions.

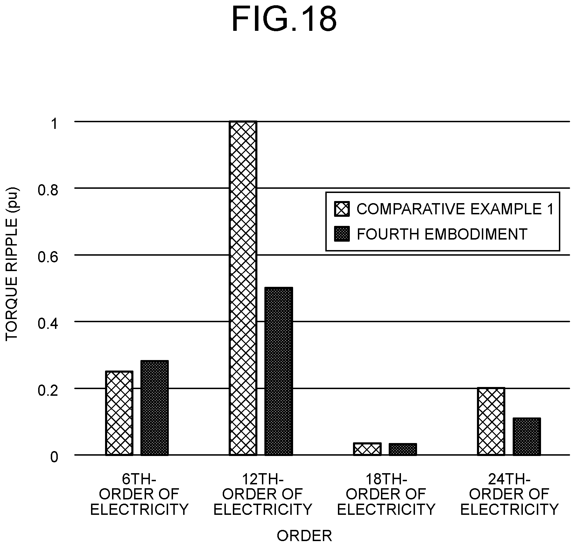

Hereinafter, with reference to FIG. 18, an effect of reducing the torque ripple by the groove portions 25 having the above-described configuration will be described.

FIG. 18 is a diagram for explanation of the effect of reducing the torque ripple by the groove portions 25 according to the fourth embodiment. The horizontal axis represents the order of the electrical angular frequency, and the vertical axis represents the magnitude of the torque ripple. In addition, each graph illustrated in FIG. 18 illustrates an analysis result of the torque ripple for a case where a load is applied to the rotating electric machine 1c (fourth embodiment), and also illustrates, as Comparative Example 1, an analysis result of the torque ripple for a case where a load is applied to the configuration of another rotating electric machine. Comparative Example 1 corresponds to a rotating electric machine having a configuration in which no groove portion is provided on the outer circumferential surface of the rotor 20.

As illustrated in FIG. 18, in the rotating electric machine of Comparative Example 1, torque ripple of the 12th-order component of electricity remarkably appears. On the other hand, in the rotating electric machine 1c of the present embodiment, the torque ripple of both the 12th-order component of electricity and the 24th-order component of electricity is decreased in comparison with Comparative Example 1. The torque ripple of the sixth-order component of electricity in the present embodiment is slightly increased in comparison with that in Comparative Example 1. The torque ripple of the 18th-order component of electricity in the present embodiment is substantially the same as that in Comparative Example 1.

Here, the torque ripple and the interval between the first set and the second set have the same relationship as that in FIG. 15 described above. Accordingly, the torque ripple of the 12th-order component of electricity can be reduced in comparison with the configuration in which only the first set is provided (configuration of the second embodiment) by setting the interval between the first set and the second set to be larger than an electrical angle of 20 degrees and less than an electrical angle of 31 degrees.

As described above, in the rotating electric machine 1c of the present embodiment, the interval between the first set and the second set is an electrical angle of 30 degrees. Such an interval falls within a range of larger than an electrical angle of 20 degrees and less than an electrical angle of 31 degrees. Therefore, in the rotating electric machine 1c of the present embodiment, as illustrated in FIG. 18, the torque ripple of the 12th-order component of electricity can be reduced in comparison with Comparative Example 1.

Moreover, the size and the distance d3 of the groove portions 25 constituting the first set and the second set are the same as those in the second embodiment. Accordingly, in the rotating electric machine 1c of the present embodiment, it is possible to prevent increase in the torque ripple of the secondary 24th-order component of electricity newly generated by providing the groove portions 25, and to reduce the torque ripple of the 24th-order component of electricity in comparison with that in Comparative Example 1.

Note that, in the present embodiment, the interval between the first set and the second set is an electrical angle of 30 degrees, but the value is not particularly limited as long as the electrical angle is within a range of larger than 20 degrees and less than 31 degrees.

### (Fifth Embodiment)

Next, the fifth embodiment will be described. In the third embodiment and the fourth embodiment described above, two first sets and two second sets each including two or three groove portions 25 are provided in each region obtained by dividing one magnetic pole region in two by the center line CL. It is, however, not necessary that the number of groove portions 25 constituting the first set and the number of groove portions 25 constituting the second set are the same as each other.

Considering the above, in the fifth embodiment, a mode in which the number of groove portions 25 constituting the first set is different from the number of groove portions 25 constituting the second set will be described. Note that elements similar to those described in the foregoing embodiments are denoted by the same reference numerals, and description thereof will be omitted as appropriate.

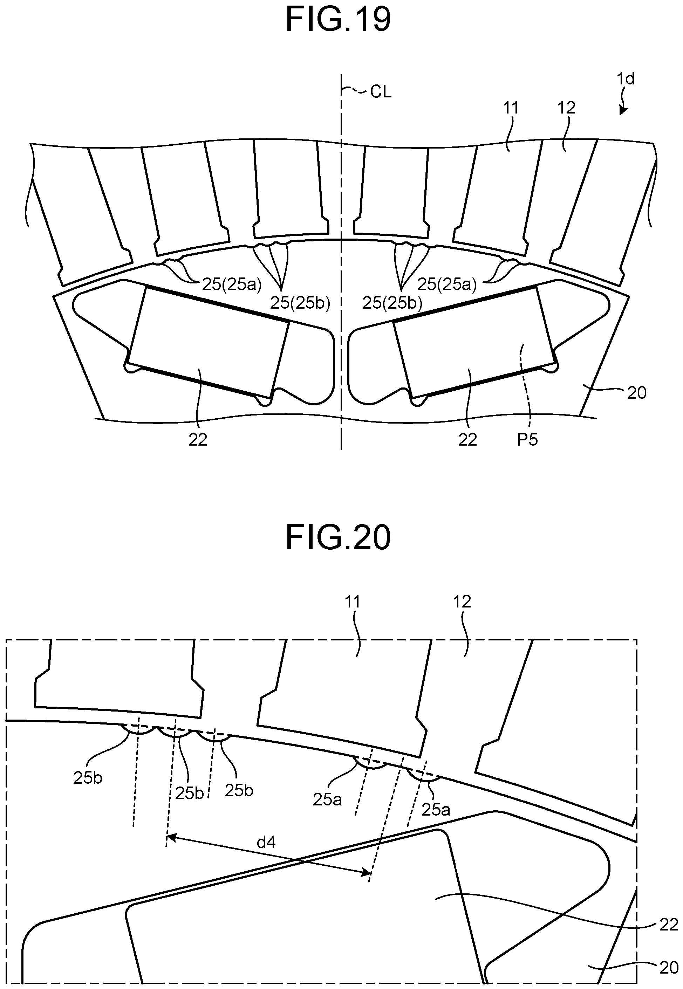

FIG. 19 is a diagram for explanation of the configuration of the groove portions 25 in a rotating electric machine 1d according to the fifth embodiment, and illustrates one magnetic pole part of the rotor 20. FIG. 20 is a partially enlarged view of a part P5 illustrated in FIG. 19.

As illustrated in FIGS. 19 and 20, the multiple groove portions 25 are provided on the outer circumferential surface of the rotor 20. Specifically, as for the groove portions 25, five groove portions 25 are provided in each of regions obtained by dividing one magnetic pole region into two by the center line CL. Here, one set of two groove portions 25a out of the five groove portions 25, which is present at the position more distant from the center line CL, corresponds to the first set of the third embodiment described above. Additionally, one set of three groove portions 25b out of the five groove portions 25, which is present at the position closer to the center line CL, corresponds to the second set of the fourth embodiment described above. The size (width d1 and depth d2) and the distance d3 of the groove portions 25a constituting the first set are the same as those of the groove portions 25 forming one set described in the first embodiment. The size (width d1 and depth d2) and the distance d3 of the groove portions 25b constituting the second set are the same as those of the groove portions 25 forming one set described in the second embodiment.

The first set and the second set are separated from each other by a spacer (rotor core) having the same diameter as a circumscribed circle circumscribing the outer circumferential surface of the rotor 20. In the rotating electric machine 1d of the present embodiment, a distance d4 between the center position between the deepest portions of 25a constituting the first set and the center position between the deepest portions of 25b constituting the second set is an electrical angle of 30 degrees.

In the present embodiment, the first set and the second set are provided in each of regions obtained by dividing one magnetic pole region into two by the center line CL so as to be line-symmetric with respect to the center line CL, but the present invention is not limited thereto. The first set and the second set may be provided in either one of the regions.

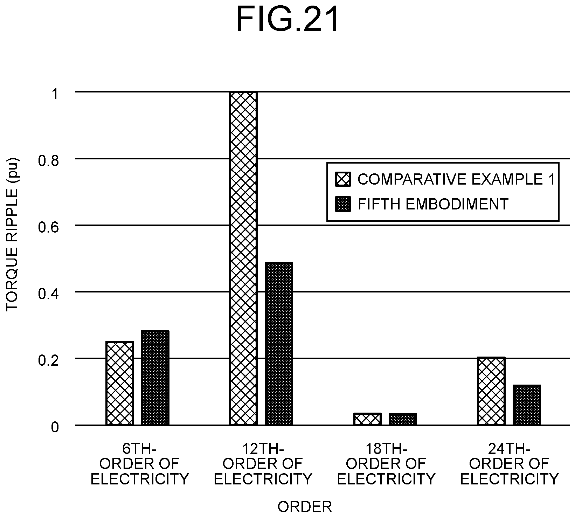

Hereinafter, with reference to FIG. 21, an effect of reducing the torque ripple with the groove portions 25 having the above-described configuration will be described.

FIG. 21 is a diagram for explanation of the effect of reducing the torque ripple by the groove portions 25 according to the fifth embodiment. The horizontal axis represents the order of the electrical angular frequency, and the vertical axis represents the magnitude of the torque ripple. In addition, each graph illustrated in FIG. 21 illustrates an analysis result of the torque ripple for a case where a load is applied to the rotating electric machine 1d (fifth embodiment), and also illustrates, as Comparative Example 1, an analysis result of the torque ripple for a case where a load is applied to the configuration of another rotating electric machine. Comparative Example 1 corresponds to a rotating electric machine having a configuration in which no groove portion is provided on the outer circumferential surface of the rotor 20.

As illustrated in FIG. 21, in the rotating electric machine of Comparative Example 1, torque ripple of the 12th-order component of electricity remarkably appears. On the other hand, in the rotating electric machine 1d of the present embodiment, the torque ripple of the 12th-order component of electricity and the 24th-order component of electricity is decreased in comparison with Comparative Example 1. The torque ripple of the sixth-order component of electricity in the present embodiment is slightly increased in comparison with that in Comparative Example 1. The torque ripple of the 18th-order component of electricity in the present embodiment is substantially the same as that in Comparative Example 1.

Here, the torque ripple and the interval between the first set and the second set have the same relationship as that in FIG. 15 described above. Accordingly, the torque ripple of the 12th-order component of electricity can be reduced in comparison with the configuration in which only the first set is provided (configuration of the second embodiment) by setting the interval between the first set and the second set to be larger than an electrical angle of 20 degrees and less than an electrical angle of 31 degrees.

As described above, in the rotating electric machine 1c of the present embodiment, the interval between the first set and the second set is an electrical angle of 30 degrees. Such an interval falls within a range of larger than an electrical angle of 20 degrees and less than an electrical angle of 31 degrees. Therefore, in the rotating electric machine 1d of the present embodiment, as illustrated in FIG. 21, the torque ripple of the 12th-order component of electricity can be reduced in comparison with Comparative Example 1.

Moreover, the size and the distance d3 of the groove portions 25 constituting the first set and the second set are the same as those in the first embodiment and the second embodiment. Accordingly, in the rotating electric machine 1d of the present embodiment, it is possible to prevent increase in the torque ripple of the secondary 24th-order component of electricity newly generated by providing the groove portions 25, and to reduce the torque ripple of the 24th-order component of electricity in comparison with that in Comparative Example 1.

In the present embodiment, the interval between the first set and the second set is an electrical angle of 30 degrees, but the value is not particularly limited as long as the electrical angle is within a range of larger than 20 degrees and less than 31 degrees. In the present embodiment, the first set includes the two groove portions 25, and the second set includes the three groove portions 25. However, the present invention is not limited thereto. The first set may include the three groove portions 25, and the second set may include the two groove portions 25.

### (Modification)

In the foregoing first to fifth embodiments, the configuration in which the multiple groove portions 25 are provided on the outer circumferential surface of the rotor 20 is described. As long as the groove portions 25 each have a cross-sectional shape protruding toward the rotation center of the rotor 20, part of or all the groove potions 25 may be filled with a non-magnetic material. The outer circumference of the rotor 20 may be covered with a non-magnetic material. This enables reduction of air resistance due to the groove portions 25 when the rotor 20 rotates, so that it is possible to prevent torque loss.

Although some embodiments of the present invention (and modifications thereto) have been described above, the embodiments have been presented as examples, and are not intended to limit the scope of the invention. The novel embodiments can be implemented in various other forms, and various omissions, substitutions, changes, and combinations can be made without departing from the gist of the invention. The embodiments and modifications thereto are included in the scope and gist of the invention, and are included in the invention described in the claims and the equivalent scope thereof.

## Claims

1. A rotating electric machine comprising:
a rotor in which permanent magnets forming one magnetic pole are plurally disposed in a circumferential direction in a cylindrical core;
a stator in which windings are provided in multiple slots facing the rotor; and
multiple groove portions being formed on an outer circumferential surface of one or both of regions of the rotor, the regions being obtained by dividing the one magnetic pole of the rotor into two by a magnetic pole center line, the multiple groove portions being separated from each other by a core having a diameter equivalent to a circumscribed circle of the rotor,
wherein each of the multiple groove portions has a shape protruding toward a rotation center of the rotor, and the multiple groove portions are spaced such that a distance between deepest portions of the groove portions has a phase relationship by which torque ripple of a predetermined order caused by formation of the groove portions weaken each other.

2. The rotating electric machine according to claim 1, wherein
the multiple groove portions have two groove portions, and
the two groove portions are spaced such that a distance between deepest portions of the groove portions is larger than 6.5 degrees and less than 9.0 degrees in electrical angle.

3. The rotating electric machine according to claim 1, wherein
the multiple groove portions have three groove portions, and
the three groove portions are spaced such that a distance between deepest portions of the groove portions is larger than 4.8 degrees and less than 8.0 degrees in electrical angle.

4. The rotating electric machine according to claim 2 or 3, wherein an intermediate position between deepest portions of the multiple groove portions is disposed at a position apart from the magnetic pole center line by 20.4 degrees to 32.4 degrees or 49.2 degrees to 58.0 degrees in electrical angle.

5. The rotating electric machine according to claim 1, wherein
the multiple groove portions have two sets of two groove portions adjacent to each other,
the two groove portions forming each set are spaced such that a distance between deepest portions of the groove portions is larger than 6.5 degrees and less than 9.0 degrees in electrical angle, and
an intermediate position between deepest portions of the groove portions of one of the two sets of the groove portions and an intermediate position between deepest portions of the groove portions of the other one of the two sets of the groove portions are disposed at an interval of larger than 20 degrees and less than 31 degrees in electrical angle.

6. The rotating electric machine according to claim 1, wherein
the multiple groove portions have two sets of three groove portions adjacent to one another,
the three groove portions forming each set are spaced such that a distance between deepest portions of the groove portions is larger than 4.8 degrees and less than 8.0 degrees in electrical angle, and
an intermediate position between deepest portions of the groove portions of one of the two sets of the groove portions and an intermediate position between deepest portions of the groove portions of the other one of the two sets of the groove portions are disposed at an interval of larger than 20 degrees and less than 31 degrees in electrical angle.

7. The rotating electric machine according to claim 1, wherein
the multiple groove portions have two sets consisting of a set of two groove portions adjacent to each other and a set of three groove portions adjacent to one another,
the two groove portions are spaced such that a distance between deepest portions of the groove portions is larger than 6.5 degrees and less than 9.0 degrees in electrical angle,
the three groove portions are spaced such that a distance between deepest portions of the groove portions is larger than 4.8 degrees and less than 8.0 degrees in electrical angle, and
an intermediate position between deepest portions of the groove portions of one of the two sets of the groove portions and an intermediate position between deepest portions of the groove portions of the other one of the two sets of the groove portions are disposed at an interval of larger than 20 degrees and less than 31 degrees in electrical angle.

8. The rotating electric machine according to any one of claims 5 to 7, wherein an intermediate position between deepest portions of the groove portions of at least one of the two sets of the groove portions is disposed within a range of 20.4 degrees to 32.4 degrees in electrical angle or a range of 49.2 degrees to 58.0 degrees in electrical angle from the magnetic pole center line.

9. The rotating electric machine according to any one of claims 1 to 8, wherein width and depth of the multiple groove portions are determined in accordance with an index representing a total value of width and depth of all the groove portions per magnetic pole.

10. The rotating electric machine according to claim 9, wherein
the index is calculated by summing, for all the groove portions formed per magnetic pole, a multiplication value obtained by multiplying a ratio of width of the groove portion to one cycle of electrical angle by a ratio of depth of the groove portion to a separation distance between the stator and the circumscribed circle of the rotor, and
the widths and the depths of the multiple groove portions are determined in a range that a value of the index is less than 0.18.

11. The rotating electric machine according to any one of claims 1 to 10, wherein part of or all the groove portions are filled with a non-magnetic material.

12. The rotating electric machine according to any one of claims 1 to 10, wherein an outer circumference of the rotor is covered with a non-magnetic material.
